# EUROPEAN PATENT SPECIFICATION

(11) **EP 3 064 851 B1**
(45) Date of publication and mention of the grant of the patent: **14.02.2024**
(21) Application number: 15157610.5
(22) Date of filing: 04.03.2015
(51) Int. Cl.: F24F 13/06, F24F 13/075

(54) **A system for supplying air to a room**
System für die Zufuhr von Luft in einen Raum
Système d'alimentation en air d'une pièce

(43) Date of publication of application: 07.09.2016
(73) Proprietor: Airmaster A/S, 9600 Aars (DK)
(72) Inventor: Bjørn, Erik, 9240 Nibe (DK)
(74) Representative: Plougmann Vingtoft a/s

(56) References cited:
- EP-A1- 1 818 198
- EP-A1- 2 495 506
- EP-A2- 0 905 462
- DE-A1- 3 002 229
- GB-A- 2 178 160
- US-A- 3 049 984
- US-A- 5 505 379
- US-A1- 2004 157 543

## Description

### FIELD OF THE INVENTION

This invention relates generally to heating, ventilation and cooling systems for use in buildings. In particular, the invention relates to systems for supplying air to a room.

### BACKGROUND OF THE INVENTION

When supplying fresh air to a room for comfort purposes (improvement of air quality and/or modification of room temperature), it is desirable that occupants in the room do not perceive the air flow as an uncomfortable draft. For this purpose, the shape and size of the opening through which the air is supplied to the room is critical.

Often, one makes use of the so-called "Coanda effect" for securing draft-free conditions. In brief, the Coanda effect is the tendency of a fluid jet to be attracted to a nearby surface, or vice versa. In air conditioning, the Coanda effect is exploited to increase the throw of e.g. a ceiling mounted diffuser. Because the Coanda effect causes air discharged from the diffuser to "stick" to the ceiling, it has a longer throw and thus travels farther before dropping for the same discharge velocity than it would if the diffuser was mounted in free air without the neighbouring ceiling. Lower discharge velocity means lower noise levels and, in the case of variable air volume (VAV) air conditioning systems, permits greater turndown ratios. The fundamental principle is to have fresh air, often sub-cooled, enter the room in a basically horizontal direction close to the ceiling. Resulting pressure and flow conditions ensure that a wall jet is formed that clings to the ceiling and travels the length of the room along the ceiling, despite higher density of the cooler inlet air.

It is also possible to have inlet air enter the room in a basically vertical direction upwards toward the ceiling. When the jet hits the ceiling, it will change direction and follow the ceiling, and the Coanda effect establishes itself.
Using such basic principles, it is possible to ensure that 1) the whole room is supplied with fresh air, and 2) the velocity and temperatures of the jet are reduced to comfortable draft-free levels before the fresh air reaches the occupied zone, due to entrainment with room air. The horizontal distance from the inlet opening at which a certain air speed is established (typically 0.2 m/s) is commonly named the "throw" of the jet.

Flow rate and temperature of the supplied air are subject to controlled variation, such as is often encountered if the air-handling or air conditioning device is "demand controlled", i.e. controlled by the need for improving air quality or changing air temperatures. In such cases it is a challenge to ensure that the inlet air stream jet maintains comfortable draft-free conditions for the occupants and at the same time travels the full length of the room, meaning that the "throw" be kept at a level suitable for the room in question.

The problem solved by the invention is to ensure constant or near constant "throw" of the inlet air stream jet under variable conditions.

An air conditioning system dealing with the optimization of the airflow direction in a room is disclosed in GB 2178160 A.

### SUMMARY OF THE INVENTION

The invention solves the problem by providing a system for supplying air under the ceiling of a room according to claim 1.

In the first configuration, the pair of air streams are given first and second air stream directions spanning a relatively large span angle whereby the air streams are relatively divergent and relatively independent of each other, and each air stream has a throw ensuring the desired distribution of the air. The air streams are directed somewhat upwards toward the ceiling whereby the air streams will spread horizontally below the ceiling. The first configuration is thus suitable for supplying relatively high volumes of air to the room while still ensuring the desired throw and distribution of air.

In the second configuration, the pair of air streams are given first and second air stream directions spanning a relatively small span angle whereby the air streams are relatively convergent and combine, and the air streams are further directed more horizontally than in the first configuration whereby the Coanda effect is used to ensure a desired throw for the combined air stream. The second configuration is thus suitable for supplying relatively low volumes of air to the room while still ensuring the desired throw and distribution of air.

In an exemplary use of the system of the invention the pair of air inlet openings are controllable to assume the first configuration for supplying a relatively high air flow in divergent directions and with a direction component towards the ceiling, and the second configuration for supplying a relatively low air flow where the supplied pair of air streams have second air stream directions are non-divergent and do not have direction components towards the ceiling.

### BRIEF DESCRIPTION OF THE DRAWINGS

Figure 1 shows a pair of wall mounted air inlet openings in a first configuration seen from above;
Figure 2 shows the pair of air inlet openings in figure 1 seen from the side;
Figure 3 shows the pair of air inlet openings in figure 1 in a second configuration and seen from above;
Figure 4 shows the pair of air inlet openings in figure 3 seen from the side;
Figure 5 shows the pair of air inlet openings in figures 1 and 3 seen from the room;
Figure 6 shows a set of air directing baffles for mounting in the air inlet openings in the first configuration and seen from the side; and
Figure 7 shows the set of air directing baffles in figure 6 in the second configuration and seen from the side.

### DETAILED DESCRIPTION OF THE INVENTION

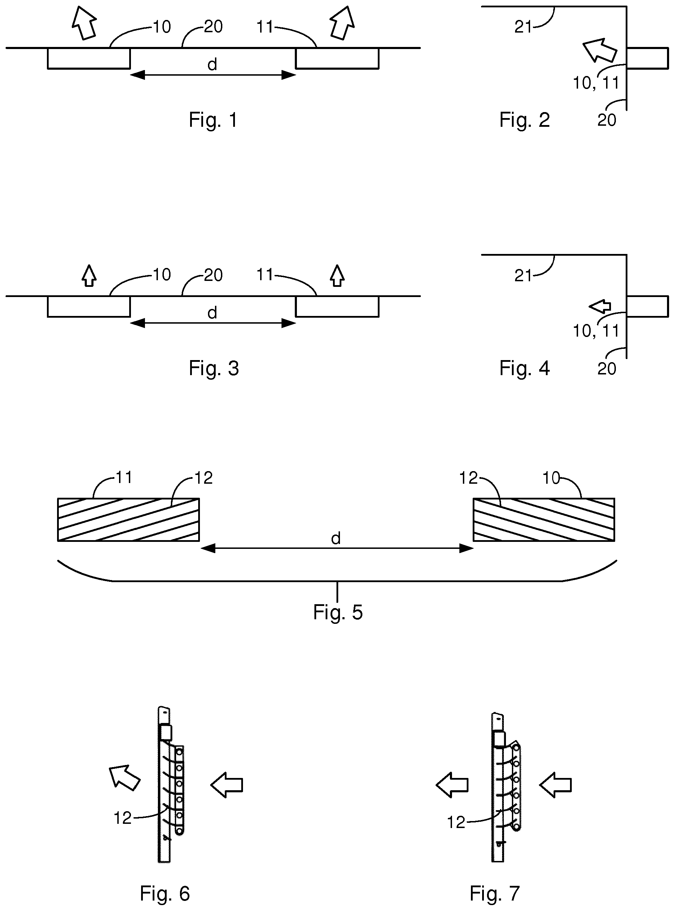

In figures 1, 3 and 5 are shown two inlet openings 10, 11 for supplying air mounted in a wall 20 of a room near the ceiling 21 and separated from each other by a horizontal distance d, e.g. by 2-3 times the largest horizontal dimension of the inlet openings. Alternatively, the inlet openings 10, 11 may arranged in a housing wall of a ventilation or air conditioning apparatus suspended from the ceiling or as a floor standing unit which does not require a wall of the room for being supported.

Each opening 10, 11 has a geometrical size that results in an essentially three-dimensional jet of the inlet air with e.g. a circular or oval cross section, as opposed to a mainly two-dimensional plane jet. The inlet openings 10, 11 are shown having a rectangular opening, but the openings may have any other suitable shape.

In figures 5, 6 and 7 is shown that the inlet openings 10, 11 have a mechanical arrangement, here in the form of a set of adjustable baffles 12, for changing the flow direction of air streams leaving the inlet openings. Figures 6 and 7 show the set of baffles 12 and an air stream directed onto the set of baffles. Figure 6 show the baffles 12 in a first configuration or position where the baffles direct the air stream upwards, and in figure 7 the baffles 12 are in a second configuration or position where the baffles let the air stream pass through the set of baffles with substantially no change in direction. Other mechanical structures than baffles can be used to direct the inlet air streams, such as nozzles whose direction can be varied.

Figure 5 shows the pair of air inlet openings 10, 11 with a set of baffles 12 in each inlet. In each inlet the set of baffles 12 is tilted so that the baffles are neither horizontal nor vertical.

In figures 1, 2 and 6 the baffles 12 are in the first configuration, and the air streams leaving the two inlet openings 10, 11 thereby, in addition to a direction component parallel to the ceiling, also have a direction component directed towards the ceiling and thus forms a first angle with the ceiling. With the baffles 12 in the first configuration figure 1 also shows that the air streams leaving the two inlet openings 10, 11 also have a direction components directed away from each other, i.e. the air stream directions are diverging.

In figures 3, 4 and 7 the baffles 12 are in the second configuration, and the air streams leaving the two inlet openings 10, 11 thereby have an air stream direction substantially parallel to the ceiling.

The positions of the baffles 12 are not limited to the first and second configurations shown here, but they can assume intermediate configurations and configurations beyond the interval defined by the above first and second configurations. The size and shape of the inlet openings can be different, and they can be controlled individually to obtain asymmetrical air flow conditions, if desired. The number of air inlet openings is not limited to two as shown here, but the ventilation apparatus can have three or more inlet openings according to need. The described change of direction of the air jets is intended to accompany a change in volume flow.

### FIRST CONFIGURATION, MAXIMUM FLOW

Jets are directed upwards and to the side to create two distinct jets which are essentially separate as illustrated in figures 1, 2 and 6. This is accomplished as the combined result of having two inlet openings separated by a horizontal distance d, and by directing the jets away from each other to the sides. If the two jets are released with too small distance d between them and/or if they are released in parallel, or possibly converging, they will attract each other and merge with each other to form a single jet.

The two separated jets are directed towards the ceiling, which in turn cause them to spread out across the ceiling in a radial pattern, forming a radial wall jet or planar jet instead of a circular jet.

This broad air stream has a large contact surface to the surrounding room air, which consequently is effectively entrained into the inlet jet causing air velocities to drop due to larger volumes of air being set in motion.

The end result of the separated radial flows is that the "throw" is kept relatively short in spite of the large flow rate considered.

### SECOND CONFIGURATION, MINIMUM FLOW

Jets are directed e.g. straight ahead and horizontally as illustrated in figures 3, 4 and 7. In this case, the two jets are close enough to be attracted to each other and will merge into a single, circular wall jet that in turn is attracted to the ceiling because of the Coanda effect. Compared to the first configuration with separated flows described above, there is less entrainment of room air, and the thus more concentrated flow keeps the "throw" relatively long.

At intermediate flow rates, the directions of the two jets can be varied to intermediate positions between those of the first and second configurations.

By choosing appropriate opening sizes corresponding to the volume flow, this principle ensures that the throw is kept nearly constant at a large variety of volume flows.

It is also possible to use the variation of jet direction to prevent down draft in the case of large temperature difference between the inlet jets and room air. Cold inlet air has a tendency to drop because of density difference, thus creating an uncomfortable down-draft. By forming a more concentrated jet this can be prevented. This can be regulated automatically by measuring inlet temperature and room temperature as well as volume flow. However, care must be taken that velocities are not too high.

## Claims

1. A system for supplying air under the ceiling (21) of a room, the system comprising a pair of air inlet openings (10, 11) arranged side by side at a horizontal distance (d) from each other, wherein the horizontal distance is at least two times the largest horizontal dimension of the inlet openings (10,11), each air inlet opening (10, 11) being configured to supply an air stream into the room in an air stream direction having a direction component parallel to the ceiling (21), wherein the flow direction of air streams leaving the pair of air inlet openings (10, 11) can be controlled to assume, by a mechanical arrangement,
a first configuration where the two air inlet openings (10, 11) direct the supplied air streams toward the ceiling (21) and to the sides to create two distinct jets which spread out across the ceiling in a radial pattern, forming a radial wall jet, where the supplied pair of air streams have first air stream directions spanning a first span angle and form a first angle with the ceiling (21), or
a second configuration wherein the two air inlet openings (10, 11) direct the supplied air streams straight ahead, such that the air streams are horizontal and parallel to the ceiling, wherein the air inlet openings (10, 11) are arranged such that the two air streams are attracted to each other to merge into a single circular jet, where the supplied pair of air streams have second air stream directions spanning a second span angle and form a second angle with the ceiling,
wherein the first span angle is different from the second span angle, and the first angle with the ceiling is different from the second angle with the ceiling.

2. A system according to claim 1 wherein, in the first configuration, the first air stream directions are divergent.

3. A system according to claim 1 wherein each of the first air stream directions has a direction component towards the ceiling.

4. A system according to claim 1 wherein, in the second configuration, the second air stream directions are non-divergent.

5. A system according to claim 1 wherein the second air stream directions do not have direction components towards the ceiling.

6. A method of operating a system according to claim 1 for suppling air to a room, the method comprising
at relatively high air flow, operating the system in the first configuration, wherein the two distinct jets are directed towards the ceiling, such that the ceiling acts to horizontally spread the streams below the ceiling,
at relatively low air flow, operating the system in the second configuration, wherein the jets are combined, and
at intermediate air flows, operating the system in an intermediate position between the first and second configuration.

## Patentansprüche

1. System für die Zufuhr von Luft unter die Decke (21) eines Raumes, wobei das System ein Paar von Lufteinlassöffnungen (10, 11) umfasst, das nebeneinander in einem horizontalen Abstand (d) voneinander angeordnet ist, wobei der horizontale Abstand mindestens das Zweifache der größten horizontalen Abmessung der Einlassöffnungen (10, 11) beträgt, wobei jede Lufteinlassöffnung (10, 11) so konfiguriert ist, dass sie einen Luftstrom in den Raum in einer Luftstromrichtung mit einer Richtungskomponente parallel zu der Decke (21) zuführt, wobei die Strömungsrichtung von Luftströmen, die das Paar von Lufteinlassöffnungen (10, 11) verlassen, so gesteuert werden kann, dass sie durch eine mechanische Anordnung annimmt
eine erste Konfiguration, bei der die beiden Lufteinlassöffnungen (10, 11) die zugeführten Luftströme in Richtung der Decke (21) und zu den Seiten lenken, um zwei unterschiedliche Strahlen zu erzeugen, die sich über die Decke in einem radialen Muster ausbreiten und einen radialen Wandstrahl bilden, wobei das zugeführte Paar von Luftströmen erste Luftstromrichtungen aufweist, die einen ersten Spannwinkel überspannen und einen ersten Winkel mit der Decke (21) bilden, oder
eine zweite Konfiguration, bei der die beiden Lufteinlassöffnungen (10, 11) die zugeführten Luftströme geradeaus lenken, so dass die Luftströme horizontal und parallel zu der Decke verlaufen, wobei die Lufteinlassöffnungen (10, 11) so angeordnet sind, dass die beiden Luftströme zueinander hingezogen werden, um in einen einzigen kreisförmigen Strahl zu verschmelzen, wobei das zugeführte Paar von Luftströmen zweite Luftstromrichtungen aufweist, die einen zweiten Spannwinkel überspannen und einen zweiten Winkel mit der Decke bilden,
wobei der erste Spannwinkel von dem zweiten Spannwinkel verschieden ist und der erste Winkel mit der Decke von dem zweiten Winkel mit der Decke verschieden ist.

2. System nach Anspruch 1, wobei in der ersten Konfiguration die ersten Luftstromrichtungen divergent sind.

3. System nach Anspruch 1, wobei jede der ersten Luftstromrichtungen eine Richtungskomponente in Richtung der Decke aufweist.

4. System nach Anspruch 1, wobei in der zweiten Konfiguration die zweiten Luftstromrichtungen nicht divergent sind.

5. System nach Anspruch 1, wobei die zweiten Luftstromrichtungen keine Richtungskomponenten in Richtung der Decke aufweisen.

6. Verfahren zum Betreiben eines Systems nach Anspruch 1 für die Zufuhr von Luft in einen Raum, wobei das Verfahren umfasst
bei relativ hoher Luftströmung, Betreiben des Systems in der ersten Konfiguration, wobei die beiden unterschiedlichen Strahlen zu der Decke gelenkt werden, so dass die Decke eine horizontale Verteilung der Ströme unter der Decke bewirkt,
bei relativ geringer Luftströmung, Betreiben des Systems in der zweiten Konfiguration, wobei die Strahlen kombiniert werden, und
bei mittleren Luftströmungen, Betreiben des Systems in einer Zwischenposition zwischen der ersten und der zweiten Konfiguration.

## Revendications

1. Système d'alimentation en air sous le plafond (21) d'une pièce, le système comprenant une pair d'orifices d'entrée (10, 11) d'air disposés côte à côte à une distance horizontale (d) l'un de l'autre, la distance horizontale étant d'au moins deux fois la plus grande dimension horizontale des orifices d'entrée (10,11) d'air, chaque dispositif d'entrée (10, 11) d'air étant configuré pour amener un flux d'air dans la pièce dans une direction de flux d'air ayant une composante directionnelle parallèle au plafond (21), la direction de circulation des flux d'air quittant la paire d'orifices d'entrée (10, 11) d'air pouvant être réglée afin d'adopter, par un agencement mécanique,
une première configuration dans laquelle les deux orifices d'entrée (10, 11) d'air dirigent vers le plafond (21) et vers les côtés les flux d'air amenés afin de créer deux jets distincts qui s'étalent sur le plafond en une disposition radiale, en formant un jet mural radial, la paire amenée de flux d'air ayant des premières directions de flux d'air couvrant un premier angle de portée et faisant un premier angle avec le plafond (21), ou
une seconde configuration dans laquelle les deux orifices d'entrée (10, 11) d'air dirigent en ligne droite les flux d'air amenés, de sorte que les flux d'air sont horizontaux et parallèles au plafond, les orifices d'entrée (10, 11) d'air étant disposés de telle façon que les deux flux d'air sont attirés l'un vers l'autre pour fusionner en un jet circulaire unique, la paire amenée de flux d'air ayant des secondes directions de flux d'air couvrant un second angle de portée et faisant un second angle avec le plafond,
le premier angle de portée étant différent du second angle de portée, et le premier angle avec le plafond étant différent du second angle avec le plafond.

2. Système selon la revendication 1 dans lequel, dans la première configuration, les premières directions de flux d'air sont divergentes.

3. Système selon la revendication 1 dans lequel chacune des premières directions de flux d'air a une composante directionnelle vers le plafond.

4. Système selon la revendication 1 dans lequel, dans la seconde configuration, les secondes directions de flux d'air sont non divergentes.

5. Système selon la revendication 1 dans lequel les secondes directions de flux d'air n'ont pas de composantes directionnelles vers le plafond.

6. Procédé pour faire fonctionner un système selon la revendication 1 afin d'amener de l'air à une pièce, le procédé comprenant
à un débit d'air relativement élevé, faire fonctionner le système dans la première configuration, dans laquelle les deux jets distincts sont dirigés vers le plafond, de sorte que le plafond agit pour étaler horizontalement les flux au-dessous du plafond,
à un débit d'air relativement faible, faire fonctionner le système dans la seconde configuration, dans laquelle les jets sont combinés, et
à des débits intermédiaires, faire fonctionner le système dans une position intermédiaire entre la première et la seconde configuration.
